# EUROPEAN PATENT APPLICATION

(11) **EP 4 733 091 A1**
(43) Date of publication of application: **29.04.2026**
(21) Application number: 25207220.2
(22) Date of filing: 07.10.2025
(51) Int. Cl.: B60C 23/04

(54) **SENSOR UNIT AND METHOD FOR DETECTION OF RAPID TIRE PRESSURE LOSS**

(30) Priority: 23.10.2024 US 202463710766 P; 26.09.2025 US 202519341257
(71) Applicant: The Goodyear Tire & Rubber Company, Akron, OH 44316 (US)
(72) Inventor: GLICKSTEIN, Jarred, Akron, 44316 (US)
(74) Representative: Kutsch, Bernd

(57) **Abstract**

A sensor unit (10) and a method using such a sensor unit (10) for detection of a rapid pressure loss in a tire (12) is disclosed. The sensor unit (10) is attached to the tire (12) and comprises an integrated circuit (62), a microcontroller unit (64) in electronic communication with the integrated circuit (62), an antenna (68) in electronic communication with the integrated circuit (62) and configured for transmitting a signal from the sensor unit (10), a power source (70) in electronic communication with the integrated circuit (62) to power the sensor unit (10), and a discrete analog component (72) in electronic communication with the integrated circuit (62) and the microcontroller unit (64). The discrete analog component (72) includes an analog pressure sensor (74) to generate a signal of pressure indication (76), a differentiator (82) configured for receiving the signal of pressure indication (76) and calculating a rate of pressure change (84) and a level detector (86) configured for storing a threshold value (88) of a rate of pressure change. The level detector (86) is configured to generate an interrupt request (90) when the calculated rate of pressure change (84) exceeds the threshold value (88), indicating a rapid air loss event. The sensor unit (10) is configured to send the interrupt request (90) from the analog component (72) through the integrated circuit (62) to the microcontroller unit (64) to actuate or interrupt the microcontroller unit (64).

## Description

### Field of the Invention

The invention relates to pneumatic tires and monitoring systems for pneumatic tires. More particularly, the invention relates to sensor units that sense the air pressure level within a tire. Specifically, the invention is directed to a sensor unit and a method for detection of rapid pressure loss in a tire that employs an active sensing approach in order to promptly alert an operator of the vehicle and/or communicate a notice to a control system of the vehicle, while preserving sensor battery life.

### Background of the Invention

Tires experience many conditions that are beneficial to monitor. Such tires include many types of pneumatic tires, such as automotive or passenger tires, truck or commercial tires, off-the-road tires, aircraft tires, and the like. Reference herein is made to a pneumatic passenger tire by way of example, with the understanding that the invention applies to any type of tire.

A typical pneumatic tire includes a pair of bead areas and a bead core embedded in each bead area. Each one of a pair of sidewalls extends radially outward from a respective bead area to a ground-contacting tread. The tire is reinforced by a carcass that toroidally extends from one bead area to the other bead area, and an inner liner is formed on the inside surface of the carcass. When the tire is mounted on a wheel, an internal cavity is formed that is filled or inflated with pressurized air. Optimally, the tire cavity is inflated with pressurized air to a target inflation pressure.

An electronic sensor unit may be attached to the inner liner by means such as an adhesive and may measure certain parameters or conditions of the tire, such as the inflation pressure and temperature of the tire. Data from the sensor unit typically is transmitted to a receiver in order to provide notice of the condition of the tire, such as the inflation pressure or when the inflation pressure of the tire falls to a predetermined level below a target inflation pressure.

Occasionally, a rapid air loss from the tire may occur. A rapid air loss event involves most or all of the inflation pressure being lost in a short amount of time, such as less than about fifteen (15) seconds. A rapid air loss event may occur due to the tire encountering a road hazard, poor tire maintenance, and/or tire age. It is beneficial to predict or sense rapid tire pressure loss in order to communicate a notice of the pressure loss.

One prior art approach for predicting or sensing a rapid tire pressure loss is passive prediction, which employs pressure sensor data to detect conditions or parameters that indicate rapid air loss is imminent. In passive prediction, a future occurrence of rapid air loss is predicted by assessing tire health and operating conditions based on data from the tire sensor unit. The passive prediction approach is limited because it is extremely difficult to predict a rapid tire pressure loss at a specific time with a high degree of confidence.

Based upon the difficulties associated with passive prediction, an active approach is more desirable. An active approach involves consistent real time monitoring of tire inflation pressure from the tire sensor unit to detect a significant pressure drop, which may be indicative of rapid tire pressure loss. The active approach has the advantage of detection during a rapid pressure loss event, enabling a prompt alert to be sent.

Prior art sensor units are limited in active sensing due to the power required to sense and/or transmit tire inflation pressure on a constant or near-constant basis during operation of the vehicle. Prior art sensor units may experience a total depletion of battery life in a few weeks if sensing and/or transmitting tire inflation pressure occurs on a constant or near-constant basis during operation of the vehicle. To preserve battery life, such prior art sensor units sense and/or transmit tire inflation pressure at specific time intervals, such as every five (5) minutes during vehicle operation. By transmitting tire inflation pressure at such time intervals, there may be an undesirable delay in sending an alert or notice when a rapid tire pressure loss occurs.

As a result, it is desirable to develop a sensor unit for detection of rapid pressure loss in a tire that employs an active sensing approach to promptly alert an operator of the vehicle and/or communicate a notice to a control system of the vehicle, while preserving sensor battery life.

### Summary of the Invention

The invention relates to a sensor unit in accordance with claim 1 and to a method in accordance with claim 15.

Dependent claims refer to preferred embodiments of the invention.

According to an exemplary embodiment of an aspect of the invention, a sensor unit for detection of rapid tire pressure is attached to the tire. The sensor unit includes an integrated circuit and a microcontroller unit is in electronic communication with the integrated circuit. An antenna is in electronic communication with the integrated circuit and transmits a signal from the sensor unit. A power source is in electronic communication with the integrated circuit to power the sensor unit. A discrete analog component is in electronic communication with the integrated circuit and the microcontroller unit. The discrete analog component includes an analog pressure sensor to generate a signal of pressure indication, a differentiator to receive the signal of pressure indication and calculate a rate of pressure change, and a level detector to store a threshold value of a rate of pressure change. An interrupt request is generated by the level detector when the calculated rate of pressure change exceeds the threshold value, indicating a rapid air loss event. The interrupt request is sent from the analog component through the integrated circuit to the microcontroller unit to actuate or interrupt the microcontroller unit.

### Definitions

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"CAN bus" or "CAN bus system" is an abbreviation for controller area network system, which is a vehicle bus standard designed to allow microcontrollers and devices to communicate with each other within a vehicle, enabling communication between specific vehicle sensing and/or control systems.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Inner liner" means the layer or layers of elastomer or other material that form the inside surface of a tubeless tire and that contain the inflating fluid within the tire.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

### Brief Description of Drawings

The invention will be described by way of example and with reference to the accompanying drawings, in which:
Figure 1 is a schematic perspective view of a vehicle and tire employing an exemplary embodiment of the sensor unit for detection of rapid tire pressure loss of the present invention;
Figure 2 is a schematic representation of a portion of the exemplary embodiment of the sensor unit for detection of rapid tire pressure loss of the present invention;
Figure 3 is a schematic representation of another portion of the exemplary embodiment of the sensor unit for detection of rapid tire pressure loss of the present invention;
Figure 4 is a schematic plan view of a vehicle and tires with a wireless communication system employing the exemplary embodiment of the sensor unit for detection of rapid tire pressure loss of the present invention; and
Figure 5 is a schematic representation of an exemplary implementation of communication and information display of the exemplary embodiment of the sensor unit for detection of rapid tire pressure loss of the present invention.

Similar numerals refer to similar parts throughout the drawings.

### Detailed Description of Preferred Embodiments of the Invention

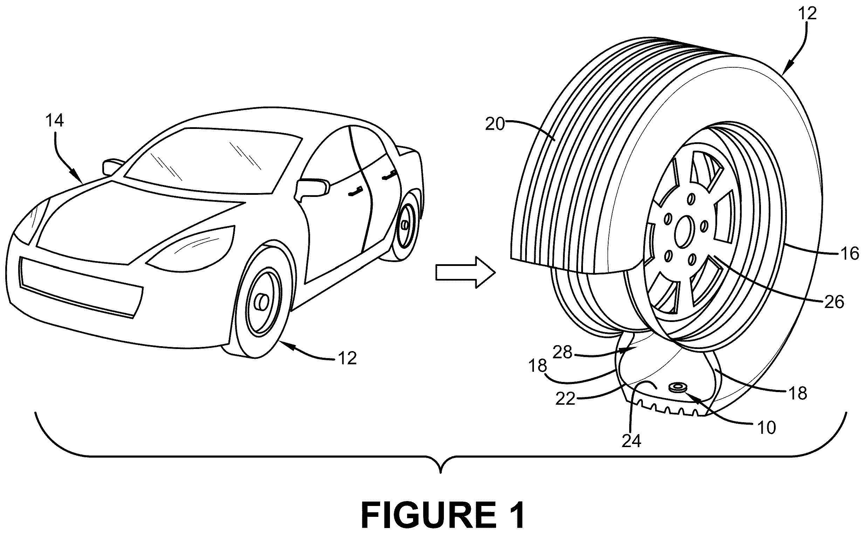

Turning now to Figures 1 through 5, an exemplary embodiment of the sensor unit 10 for detection of rapid tire pressure loss of the present invention is presented. With particular reference to Figure 1, the sensor unit 10 detects rapid pressure loss in each tire 12 supporting a vehicle 14. While the vehicle 14 is depicted as a passenger car, the invention is not to be so restricted. The principles of the invention find application in other vehicle categories such as commercial trucks, off-the-road vehicles, and the like, in which vehicles may be supported by more or fewer tires. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 extends radially outward from a respective bead area 16 to a ground-contacting tread 20. The tire 12 is reinforced by a carcass 22 that toroidally extends from one bead area 16 to the other bead area, as known to those skilled in the art. An inner liner 24 is formed on the inside surface of the carcass 22. The tire 12 is mounted on a wheel 26 in a manner known to those skilled in the art and, when mounted, forms an internal cavity 28 that is filled with a pressurized fluid, such as air.

A respective sensor unit 10 may be attached to the inner liner 24 of each tire 12 by means such as an adhesive. It is to be understood that the sensor unit 10 may be attached in such a manner, or to other components of the tire 12, such as between layers of the carcass 22, on or in one of the sidewalls 18, on or in the tread 20, and/or a combination thereof. For the purpose of convenience, reference herein shall be made to mounting of the sensor unit 10 on the tire 12, with the understanding that mounting includes all such attachment.

The sensor unit 10 is mounted on each tire 12 for the purpose of detecting certain real-time tire parameters inside the tire, such as the inflation pressure in the cavity 28 and/or tire temperature. The sensor unit 10 may also be referred to as a tire pressure monitoring system (TPMS) module or sensor. The sensor unit 10 may also include electronic memory capacity for storing identification (ID) information for each tire 12, known as tire ID information. Alternatively, tire ID information may be included in another sensor unit, or in a separate tire ID storage medium. The tire ID information may include manufacturing information for each respective tire 12, location of the tire on the vehicle 14, a service history of the tire, specific features or parameters of the tire, and/or mechanical characteristics of the tire.

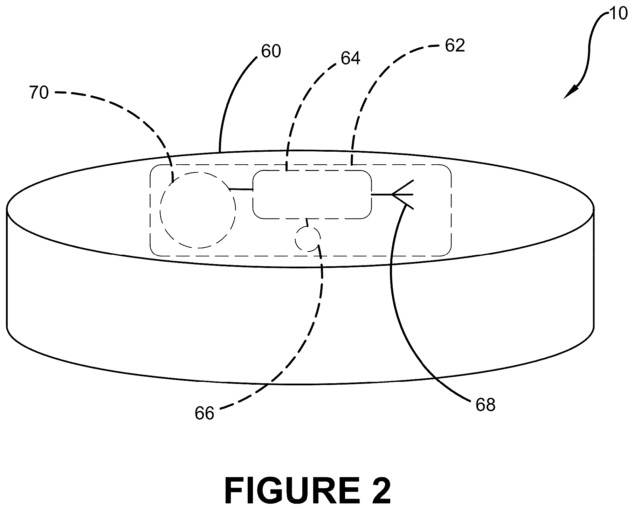

Turning now to Figure 2, by way of example, the sensor unit 10 preferably includes a housing 60 and an integrated circuit 62 disposed in the housing. The integrated circuit 62 enables electronic connection of the components of the sensor unit 10. The components preferably include a microcontroller unit 64, which is a processor for controlling operation of the sensor unit 10 and is in electronic communication with the integrated circuit 62. The components may also include a digital pressure sensor 66 in electronic communication with the integrated circuit 62 to selectively detect the inflation pressure inside the cavity 28 of the tire 12. The sensor unit 10 may include other sensors, such as a temperature sensor, accelerometer, and the like. The components of the sensor unit 10 additionally include an antenna 68 in electronic communication with the integrated circuit 62, which transmits a signal from the sensor unit 10 to an external processor and may receive a signal, as will be described in detail below. The components of the sensor unit 10 further include a power source 70 in electronic communication with the integrated circuit 62 to power the sensor unit, which may include a battery, energy harvesting unit, piezoelectric elements, and the like.

In this manner, the integrated circuit 62 enables the inflation pressure in the tire cavity 28 (Figure 1) to be selectively sensed by the digital pressure sensor 66, the sensed pressure signal to be processed by the microcontroller unit 64, and the processed pressure signal to be transmitted from the sensor unit 10 by the antenna 68, all of which is powered by the power source 70. As mentioned above, rapid depletion of the power source 70 will likely occur with indication and transmission of inflation pressure on a constant or near-constant basis. Alternatively, to preserve battery life, indication and/or transmission of inflation pressure may occur at spaced time intervals, which may result in an undesirable delay in triggering an alert in the event of a rapid pressure loss in the tire 12.

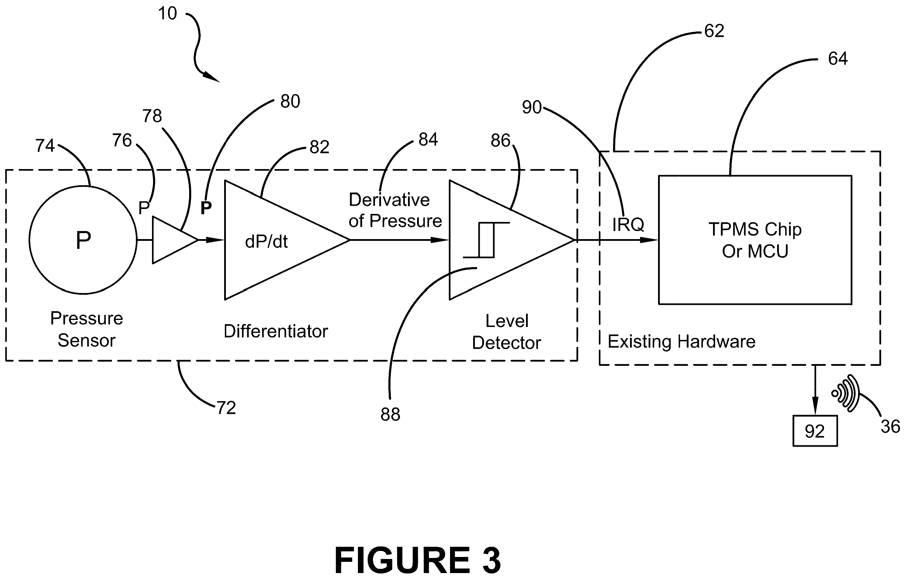

The sensor unit 10 of the present invention preserves the life of the power source 70 while providing an immediate alert in the event of a rapid pressure loss in the tire 12, as will now be described. Referring to Figure 3, the sensor unit 10 includes a discrete analog component 72 that preferably is separate from, but is in electronic communication with, the integrated circuit 62 and the microcontroller unit 64. The analog component 72 may be disposed in the same housing 60 as the integrated circuit 62 and the microcontroller unit 64, or may be disposed in a separate housing and electronically connected to the integrated circuit and the microcontroller unit.

The analog component 72 includes an ultra-low power analog pressure sensor 74, which may replace, or be used in addition to, the digital pressure sensor 66. The analog pressure sensor 74 preferably includes a pressure sensitive analog sensing element and analog output, such as a micro-electromechanical system pressure cell. Such a construction enables the analog pressure sensor 74 to actively detect the inflation pressure in the tire cavity 28 (Figure 1) while producing analog voltage output that is proportional to the inflation pressure with extremely minimal quiescent or dormant current draw, thereby requiring minimal power to preserve the life of the power source 70.

The analog pressure sensor 74 thus generates a signal of pressure indication 76 and provides the signal to an analog signal path that optionally includes a preamplifier 78. When employed, the preamplifier 78 amplifies a low electric signal from the analog pressure sensor 74 and outputs an amplified pressure indication 80 to a differentiator 82.

The differentiator 82 receives the pressure indication 76, or the amplified pressure indication 80 when the preamplifier 78 is employed, and determines a derivative of the respective pressure indication 76 or amplified pressure indication 80 to calculate a rate of pressure change 84, that is, pressure change with respect to time, which may be expressed as dP/dt. The differentiator 82 outputs a signal indicating a calculated rate of pressure change 84 to a level detector 86.

The level detector 86 preferably stores a threshold value 88 a rate of pressure change, which may be pre-configurable. When the signal indicating the calculated rate of pressure change 84 exceeds the threshold value 88, the level detector 86 triggers an interrupt request 90 to indicate a rapid air loss event. For example, the level detector 86 may be configured to trigger an interrupt request 90 when a rate at which the pressure indication 76 changes from a stable pressure level to zero in a short amount of time, such as under one minute, which may be considered a rapid air loss event.

The level detector 86 preferably includes a comparator circuit that uses positive feedback to convert an analog input signal into a digital output signal, such as a Schmitt trigger comparator. In this manner, the interrupt request 90 is a digital signal that is sent from the analog component 72 through the integrated circuit 62 to the microcontroller unit 64 to interrupt or actuate the microcontroller unit. When the interrupt request 90 is received, if the microcontroller unit 64 is in an active state, the interrupt request 90 interrupts the microcontroller unit operation and causes the unit to generate an alert signal 92. If the microcontroller unit 64 is not in an active state, the interrupt request 90 activates the microcontroller unit and causes the unit to generate the alert signal 92. The alert signal 92 preferably is sent through the antenna 68 to a control system of the vehicle 14 and/or to an operator of the vehicle, as will be described below.

The analog component 72 of the sensor unit 10 provides active sensing of the inflation pressure of the tire 12 with extremely minimal quiescent or dormant current draw, thereby greatly preserving the life of the power source 70. In addition, the active sensing approach of the analog component 72 of the sensor unit 10 enables an immediate alert signal 92 to be generated regardless of the state of the microcontroller unit 64, that is, even if the microcontroller unit is dormant or conducting another operation. By adjusting the threshold value 88 of the level detector 86, a wide range of rapid air loss events may generate an immediate alert signal 92, including rapid air loss events and slower air loss events.

As mentioned above, the discrete analog component 72 of the sensor unit 10 preferably is separate from, but in electronic communication with, the integrated circuit 62 and the microcontroller unit 64. Alternatively, the discrete analog component 72 may be directly incorporated into the integrated circuit 62 and/or the microcontroller unit 64.

Optionally, the discrete analog component 72 of the sensor unit 10 may include operational amplifier circuits to amplify low analog electric signals and thereby output amplified analog electric signals for improved signal processing. In addition, the discrete analog component 72 of the sensor unit 10 may optionally include passive or active analog filters to remove unwanted frequency components and/or enhance wanted frequency components for improved signal processing. Moreover, the threshold value 88 may be stored in a separate digital or analog memory cell, enabling easier pre-configuration of the threshold value, and the memory cell may be in direct communication with the discrete analog component 72 and/or the microcontroller unit 64. Additionally, the discrete analog component 72 of the sensor unit 10 may optionally employ an analog temperature sensor in place of the analog pressure sensor 74, as the inflation pressure indication 76 may be determined according to the ideal gas law.

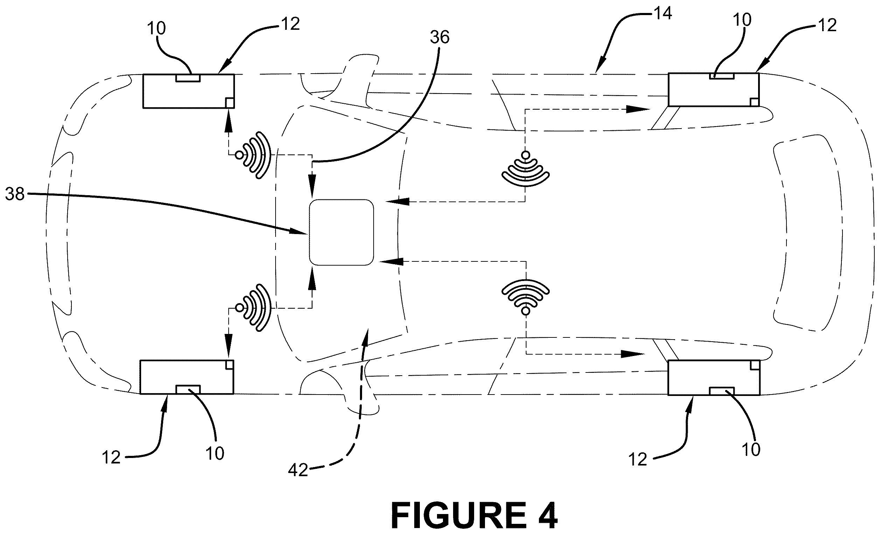

With reference to Figure 4, as described above, each sensor unit 10 includes an antenna 68 for wireless transmission 36 of data from the sensor unit, including the alert signal 92, to a processor 38. The processor 38 may be mounted on the vehicle 14 as shown, or may be integrated into the sensor unit 10. For the purpose of convenience, the processor 38 will be described as being mounted on the vehicle 14, with the understanding that the processor may alternatively be integrated into the sensor unit 10. Preferably, the processor 38 is in electronic communication with or integrated into an electronic system of the vehicle 14, such as the vehicle CAN bus system 42.

The processor 38 enables input and processing of data from the sensor unit 10, including the alert signal 92, as well as input and processing of data from other sensors that are in electronic communication with the CAN bus system 42. Communication from each sensor unit 10 with the CAN bus system 42 also enables communication with vehicle control systems, such as an antilock braking system (ABS), an electronic stability control system (ECS), and the like. In this manner, when the alert signal 92 is generated by the sensor unit 10, the alert signal may be communicated to one or more of the vehicle control systems, enabling actuation of such vehicle control systems in response to the alert signal.

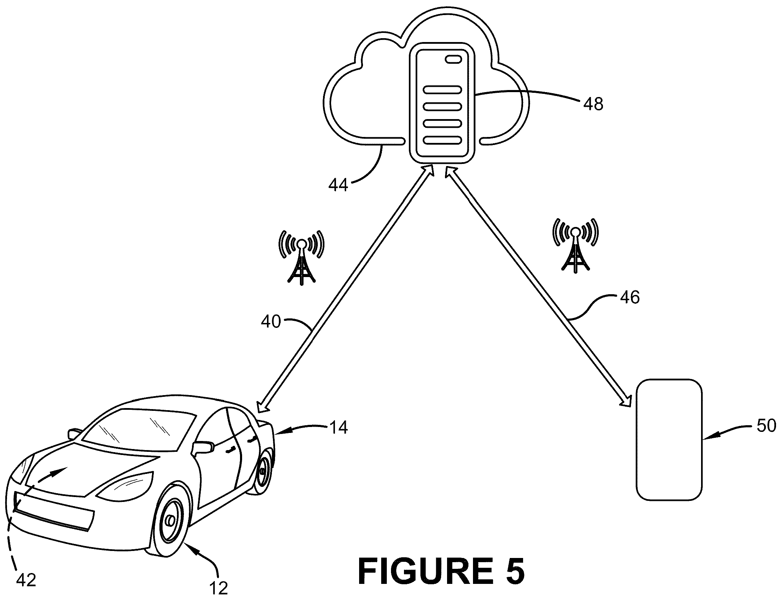

Turning to Figure 5, the alert signal 92 from the sensor unit 10 may be wirelessly transmitted 40 from the processor 38 (Figure 4) and/or the CAN-bus 42 on the vehicle 14 to a remote processor 48, such as a processor in a cloud-based server 44. The alert signal 92 may be wirelessly transmitted 46 from the remote processor 48 to a display device 50 that is accessible to a user or operator of the vehicle 14, such as a smartphone, or to a fleet manager. In this manner, when the alert signal 92 is generated by the sensor unit 10, the user of the vehicle and/or a fleet manager may be notified of the alert signal and may take appropriate action in response to the alert signal.

The sensor unit 10 for detection of rapid tire pressure loss of the present invention detects rapid pressure loss in a tire 12 through an active sensing approach to promptly alert an operator of the vehicle and/or communicate a notice to a control system of the vehicle, while preserving the life of the power source 70. The sensor unit 10 employs an analog component 72 to provide active sensing of the inflation pressure of the tire 12 with extremely minimal current draw to preserve the life of the power source 70. In addition, the active sensing approach of the analog component 72 enables an immediate alert signal 92 to be generated regardless of whether the microcontroller unit 64 is dormant or conducting another operation. When the alert signal 92 is generated by the sensor unit 10, vehicle control systems may be actuated and the user of the vehicle and/or a fleet manager may be notified in order to take appropriate action.

The present invention also includes a method of detecting rapid pressure loss in a tire 12. The method includes steps in accordance with the description that is presented above and shown in Figures 1 through 5.

It is to be understood that the structure of the above-described sensor unit 10 and its components, including the analog component 72, may be altered or rearranged, or components or steps known to those skilled in the art omitted or added, without affecting the overall concept or operation of the invention. For example, as described above, the digital pressure sensor 66 may be omitted and/or the analog component 72 may include operational amplifier circuits, passive or active analog filters, a digital or analog memory cell, an analog temperature sensor, and other components.

## Claims

1. A sensor unit for detection of rapid pressure loss in a tire (12), the sensor unit (10) being attached to the tire (12), the sensor unit (10) comprising:
an integrated circuit (62);
a microcontroller unit (64) in electronic communication with the integrated circuit (62);
an antenna (68) in electronic communication with the integrated circuit (62) and configured for transmitting a signal from the sensor unit (10);
a power source (70) in electronic communication with the integrated circuit (62) to power the sensor unit (10);
a discrete analog component (72) in electronic communication with the integrated circuit (62) and the microcontroller unit (64), the discrete analog component (72) including:
an analog pressure sensor (74) to generate a signal of pressure indication (76);
a differentiator (82) configured for receiving the signal of pressure indication (76) and calculating a rate of pressure change (84); and
a level detector (86) configured for storing a threshold value (88) of a rate of pressure change;
wherein the level detector (86) is configured to generate an interrupt request (90), preferably as a digital signal, when the calculated rate of pressure change (84) exceeds the threshold value (88), indicating a rapid air loss event; and
wherein the sensor unit (10) is configured to send the interrupt request (90) from the analog component (72) through the integrated circuit (62) to the microcontroller unit (64) to actuate or interrupt the microcontroller unit (64).

2. The sensor unit of claim 1, wherein the microcontroller unit (64) is configured to generate an alert signal (92) upon receipt of the interrupt request (90).

3. The sensor unit of claim 1 or 2, wherein the antenna (68) is configured to transmit the alert signal (92) to a remote processor (48), the remote processor (38, 48) being preferably mounted on a vehicle (14) supported by the tire (12) and/or preferably being in electronic communication with an electronic system of the vehicle (14).

4. The sensor unit in accordance with at least one of the previous claims, further comprising at least one vehicle control system in communication with the processor (38, 48), wherein the at least one vehicle control system is configured to be actuated in response to the alert signal (92).

5. The sensor unit in accordance with at least one of the previous claims, wherein the sensor unit (10) is configured to transmit the alert signal (92) from the remote processor (38, 48) to a display device (50) accessible to at least one of a user of a vehicle supported by the tire (12) and/or a fleet manager.

6. The sensor unit in accordance with at least one of the previous claims, wherein the calculated rate of pressure change (84) is determined as a derivative of the pressure indication (76).

7. The sensor unit in accordance with at least one of the previous claims, further comprising a preamplifier (78) configured for receiving a low electric signal from the analog pressure sensor (74) and for outputting an amplified pressure indication (80) to the differentiator (82).

8. The sensor unit in accordance with at least one of the previous claims, wherein the discrete analog component (72) is separate from the integrated circuit (62) and the microcontroller unit (64); or wherein the discrete analog component (72) is directly incorporated into at least one of the integrated circuit (62) and the microcontroller unit (64).

9. The sensor unit in accordance with at least one of the previous claims, further comprising a housing (60), wherein the integrated circuit (62) and the microcontroller unit (64) are disposed in the housing (60), and wherein the analog component (72) is either also disposed in the housing (60) or is disposed in a separate housing.

10. The sensor unit in accordance with at least one of the previous claims, wherein the level detector (86) is configured to trigger the interrupt request (90) when the calculated rate of pressure change (84) indicates a change from a stable pressure level to zero in under one minute.

11. The sensor unit in accordance with at least one of the previous claims, wherein the level detector (86) includes a comparator circuit with positive feedback to convert an analog input signal into a digital output signal.

12. The sensor unit in accordance with at least one of the previous claims, wherein the power source (70) includes at least one of a battery, an energy harvesting unit, and a piezoelectric element; and/or wherein the sensor unit (10) further comprises a digital pressure sensor (66).

13. The sensor unit in accordance with at least one of the previous claims, wherein the sensor unit (10) is attached to an inner liner (24 of the tire (12).

14. The sensor unit in accordance with at least one of the previous claims, wherein the analog component (72) further comprises at least one of an operational amplifier circuit, a passive analog filter, an active analog filter, a digital memory cell, an analog memory cell, and an analog temperature sensor.

15. A method for detection of rapid pressure loss in a tire (12), the method comprising:
(i) providing a sensor unit (10) attached to the tire (12), the sensor unit (10) comprising:
an integrated circuit (62);
a microcontroller unit (64) in electronic communication with the integrated circuit (62);
an antenna (68) in electronic communication with the integrated circuit (62) and transmitting a signal from the sensor unit (10);
a power source (70) in electronic communication with the integrated circuit (62) to power the sensor unit (10);
a discrete analog component (72) in electronic communication with the integrated circuit (62) and the microcontroller unit (64), the discrete analog component (72) including:
an analog pressure sensor (74) generating a signal of pressure indication (76);
a differentiator (82) receiving the signal of pressure indication (76) and calculating a rate of pressure change (84); and
a level detector (86) storing a threshold value (88) of a rate of pressure change;
(ii) generating an interrupt (90) request by the level detector (86), preferably as a digital signal, when the calculated rate of pressure change (84) exceeds the threshold value (88), indicating a rapid air loss event; and
(iii) sending the interrupt request (90) from the analog component (72) through the integrated circuit (62) to the microcontroller unit (64) to actuate or interrupt the microcontroller unit (64).
